# EUROPÄISCHE PATENTSCHRIFT

(11) **EP 0 781 513 B1**
(45) Veröffentlichungstag und Bekanntmachung des Hinweises auf die Patenterteilung: **06.03.2002**
(21) Anmeldenummer: 96119675.5
(22) Anmeldetag: 09.12.1996
(51) Int. Cl.: A23L 1/18, A23L 1/10

(54) **Verfahren zur Herstellung von modifizierten gepufften Getreideprodukten mit einem Gehalt an Vitaminen, Mineralstoffen und/oder Spurenelementen**
Process for producing modified puffed cereal products containing vitamins, minerals and/or trace elements
Procédé de préparation de produits à base de céréales gonflés et modifiés contenant des vitamines, minéraux et/ou oligo-éléments

(30) Priorität: 14.12.1995 DE 19546654
(43) Veröffentlichungstag der Anmeldung: 02.07.1997
(73) Patentinhaber: Lemke, Stefan, 23669 Timmendorfer Strand (DE); Sagredos, Angelos N., Prof. Dr., 20249 Hamburg (DE)
(72) Erfinder: Lemke, Stefan, 23669 Timmendorfer Strand (DE); Sagredos, Angelos N., Prof. Dr., 20249 Hamburg (DE)
(74) Vertreter: Schulmeyer, Karl-Heinz, Dr.

(56) Entgegenhaltungen:
- WO-A-95/13710
- DE-C- 4 323 788
- FR-A- 1 582 009
- US-A- 4 478 857
- US-A- 5 258 189
- DATABASE WPI Week 9105 Derwent Publications Ltd., London, GB; AN 91-037001 XP002032303 & ZA 9 000 542 A (C. M. MORLAND) , 31.Oktober 1990

## Beschreibung

Vorliegende Erfindung betrifft ein Verfahren zur Herstellung von modifizierten gepufften Getreideprodukten mit einem Gehalt an Lebensmittelzusatzstoffen, nämlich an Vitaminen, Mineralstoffen und/oder Spurenelementen, bei dem rohe Getreidekörner unter Einwirkung von Wärme, gegebenenfalls unter Rühren, in einem geeigneten Behälter gepufft werden, wobei die Zusatzstoffe mindestens während eines Teils der Puffzeit in dem Behälter vorliegen.

Verfahren zur Herstellung von gepufften Getreideprodukten, beispielsweise von gepufftem Mais (= Popcorn), mit verschiedenen Zusatzstoffen, mit denen das Aussehen und der Geschmack der gepufften Getreidekörner verändert bzw. verbessert werden sollen, sind bereits bekannt. Die gepufften Getreideprodukte werden z.B. aus geeigneten Getreidekörnern, beispielsweise aus rohen Maiskörnern, durch kurzfristiges Erhitzen, z.B. in einem Röstkessel, gegebenenfalls in Gegenwart von Fetten oder Fett + Zucker oder Fett + Salz, auf Temperaturen deutlich oberhalb des Siedepunkts von Wasser, z.B. auf Temperaturen von 150 bis 250°C, erzeugt, wobei das in den Getreidekörnern enthaltene Wasser unter den Verfahrensbedingungen plötzlich verdampft und dabei die Körner unter Volumenvergrößerung aufplatzen.

Zur Verbesserung oder Abwandlung des Geschmacks von gepufften Getreideprodukten ist es bekannt, z.B. vor, während oder nach dem Puffen der Getreidekörner Fette, Zucker, Salz, Aromastoffe und/oder Zuckeraustauschstoffe den zu puffenden Getreidekörnern zuzusetzen. Dabei ist man bestrebt, die Verfahrensbedingungen so zu wählen, daß die Zusatzstoffe sich möglichst gleichmäßig auf die gepufften Getreidekörner verteilen.

So ist aus DE 33 35 781 A1 ein Verfahren zur Herstellung von karamelisiertem oder zuckerglasiertem Popcorn bekannt, bei dem in einem auf etwa 250°C erhitzten Kessel ein Schmelzgemisch aus Fett und Zucker bereitet und die rohen Maiskörner anschließend in dieses Schmelzgemisch gegeben werden, bis sie puffen. Wichtig ist, daß das Fett oder Öl immer vor dem Zucker in den Kessel gegeben wird, da sonst der Zucker an der Kesselwand festbackt. Fett und Zucker werden hierbei in einem Gewichtsverhältnis von etwa 1:14 verwendet. Weitere Zusätze wie Erdnußkerne, Mandeln, Lebensmittelfarben oder Aromaträger wie Schokolade können in das Schmelzgemisch zusätzlich eingegeben werden.

Aus DE 43 23 788 C1 ist ein Verfahren zur Herstellung von modifiziertem, für Diabetiker geeignetem Popcorn bekannt, bei dem Zucker durch Süßstoffe oder Zuckeraustauschstoffe ersetzt und wahlweise Aromastoffe eingesetzt werden, wobei zunächst in einem Puffkessel Fett oder Öl auf eine Pufftemperaturen von 250 bis 260°C anstelle der üblichen 175°C erhitzt wird, dann Mais und danach die Süßstoffe oder Zukkeraustauschstoffe und gegebenenfalls Aromastoffe zugefügt werden. Dadurch werden die Süßstoffe oder Zuckeraustauschstoffe nur deutlich verkürzten Puffzeiten von 50-75% der gesamten Puffzeit im Kessel ausgesetzt. Die möglichst geringe Verweilzeit bei den hohen Temperaturen soll eine thermische Zersetzung der Süßstoffe oder Zuckeraustauschstoffe weitgehend vermeiden helfen. Außerdem ist es zu diesem Zweck zwingend erforderlich, zunächst Öl (oder Fett) im Puffkessel auf die gewünschte Pufftemperatur zu bringen, wobei bevorzugt der Anteil an Öl verhältnismäßig hoch gewählt wird.

Verzehrfertiges Popcorn kann auch hergestellt werden in einer für die Popcorn-Herstellung geeigneten Mikrowelleneinrichtung, wobei die Maiskörner gegebenenfalls zusammen mit Fett und Zucker oder Fett und Salz mit Hilfe der Mikrowellenenergie zum Puffen gebracht werden.

So ist aus EP 0262791 B1 ein Verfahren zur Herstellung von mit einem Überzug versehenen Popcorn bekannt, bei dem die Maiskörner zusammen mit Öl in einem Gefäß mittels Mikrowellenenergie geröstet werden, wonach man auf den gerösteten Mais einen Süßigkeitsriegel aus Backfett, Wasser, einem eßbaren Emulgiermittel und einem Süßstoff auflegt, der durch Anwenden von Mikrowellenenergie auf dem gerösteten Mais schmilzt und dabei auf dem Popcorn einen Überzug bildet.

Ein Verfahren zur Herstellung von schmackhaftem, öl- und fettfreiem Popcorn wird in US 4 767 635 beschrieben, bei dem vor dem Puffen das rohe Maiskorn mit einem eßbaren Kleber, z.B. Gelatine, einem eßbaren Salz und Farb- und Geschmacksstoffen beschichtet wird, vorzugsweise in einer wäßrigen Lösung, worauf nach dem Trocknen ein nährstoffvermindertes Popcorn durch Behandlung mit heißer Luft erzeugt wird.

Bei einem anderen, aus US 4 888 186 bekannten Verfahren wird das bereits fertige, noch heiße Popcorn mit einer Mischung aus Fett mit einem Schmelzpunkt von nicht weniger als 35°C und Geschmacksstoffen, z.B. einer Zwiebel-Würze-Mischung und/oder Salz, im Verhältnis von z.B. 1:1 besprüht.

Aus DE 40 01 069 A1 ist ein Verfahren zur Herstellung von modifiziertem, zuckerfreiem Popcorn bekannt, bei dem das Popcorn durch Aufpuffen von rohem Mais unter Einwirkung von Wärme und in Gegenwart des Süßungsmittels Isomalt hergestellt wird. Das Puffen erfolgt bei einer Temperatur von etwa 130 bis 150°C unter gleichzeitigem ständigen Umrühren. Die Überzugsmasse setzt sich zusammen aus dem Süßungsmittel, pflanzlichen Fetten und Fruchtgeschmacksstoffen.

Ein nährstoffvermindertes, mit Aroma- und Süßungsmitteln versetztes Popcorn wird in US 5 215 770 beschrieben, das aus einer Menge in üblicher Weise gepuffter Maiskörner mit einer auf das Popcorn aufgebrachten Deckschicht aus wenigstens etwa 30 Gew.-% Polydextrose, Würzmitteln und Süßungsmitteln und etwa 5 bis 20 Gew.-% Wasser besteht. Die würzige Deckschicht soll im wesentlichen fettfrei sein.

Aus FR 26 80 082 A1 ist ein Verfahren zur Herstellung von Popcorn bekannt, bei dem Mais vor dem Puffen mit einer wäßrigen oder alkoholischen Lösung oder Suspension von Aromaund Geschmacksstoffen in kolloidalen Substraten wie Pflanzengummen, z.B. Gummi arabicum, als Trägersubstanz behandelt wird, wobei der kolloidalen Mischung lebensmittelrechtlich zugelassene Antioxidantien in geringen Mengen zugefügt werden können, nämlich BHA, BHT oder Ascorbinsäure.

In EP 0217 368 A2 wird zur Herstellung von mit Aromastoffen imprägniertem Popcorn vorgeschlagen, die Maiskörner vor dem Puffen mit einer wäßrigen Lösung des Aromastoffes zu tränken. Als Aromastoffe werden Kochsalz, Knoblauchsalz, Selleriesalz u. dgl., ferner Zucker, Schokolade, Käse und Fruchtaromen genannt. Anschließend müssen die mit dem Aromastoff imprägnierten Maiskörner vor dem Puffen noch getrocknet werden, wodurch das Verfahren zeit- und arbeitsaufwendig ist.

Gemäß US 5 284 666 werden die rohen Maiskörner zunächst unter Vakuum bei 20 bis 40°C teilweise entwässert und anschließend mit einer wäßrigen Aromalösung behandelt. Die mit der Aromalösung imprägnierten Maiskörner müssen vor dem Puffen erst noch unter milden Bedingungen getrocknet werden.

Das fertige Popcorn für sich enthält nur sehr geringe Mengen an verschiedenen Vitaminen, Mineralstoffen und Spurenelementen, die durch die Verwendung von Fruchtkonzentraten, z.B. Essenzen von Weintrauben, Orangen, Kirschen und Erdbeeren, nur unwesentlich vergrößert werden, so daß diese Spuren an Mikronährstoffen zu gering sind, um beim Verzehr üblicher Mengen, z.B. 100 g herkömmlichen Popcorns, ernährungsphysiologisch eine merkliche Rolle zu spielen.

Da Popcorn jedoch vor allem für Kinder und Jugendliche ein sehr populärer Snack ist, erscheint es aus ernährungsphysiologischer Sicht wünschenswert, wenn an Vitaminen, Mineralstoffen und Spurenelementen deutlich angereicherte Popcornprodukte zur Verfügung gestellt werden können.

Die bekannten Verfahren zur Herstellung von Popcorn sehen zwar eine Reihe der verschiedensten Zusatzstoffe zur Verbesserung von Aussehen und Geschmack vor, geben aber keine Hinweise zur Anreicherung des Popcorns mit den ernährungsphysiologisch wichtigen Mikronährstoffen, insbesondere Vitaminen, Mineralstoffen und Spurenelementen, in einer für den Menschen wirksamen Menge an. Einer der Gründe hierfür ist die bekannte hohe Empfindlichkeit zumindest eines Teils dieser mikronutritiven Komponenten, insbesondere der Vitamine, gegenüber einer hohen thermischen bzw. energetischen Belastung, die es aussichtslos erscheinen läßt, diese Komponenten den Bedingungen der Popcornherstellung bei Temperaturen zwischen 130 und 280°C oder einer entsprechend energiereichen Mikrowellenbehandlung auszusetzen, da zu erwarten war, daß diese mikronutritiven Komponenten sich dabei praktisch ganz zersetzen und damit ihre gewünschte Wirkung einbüßen.

Ferner war nicht vorauszusehen, daß unter den Bedingungen des sehr kurzfristigen Puffens die in Frage kommenden Mineralstoffe und Spurenelemente in dem erforderlichen Maße auf die aufgepufften Getreidekörner übergehen und sich gleichmäßig verteilen würden, da zumindest bei einem beträchtlichen Teil dieser Komponenten zu erwarten war, daß wegen ihres hohen oder fehlenden Siedepunktes bzw. sehr niedrigen Dampfdruckes Schwierigkeiten beim Übergang auf die aufgepufften Getreidekörner auftreten würden.

Der vorliegenden Erfindung liegt die Aufgabe zugrunde, ein Verfahren zur Herstellung von an Vitaminen, Mineralstoffen und/oder Spurenelementen angereicherten gepufften Getreideprodukten zu schaffen, bei dem diese essentiellen Mikronährstoffe trotz der angewandten hohen thermischen bzw. energetischen Belastungen beim Puffen der rohen Getreidekörner in hohem Maße unversehrt von den aufgepufften Körnern aufgenommen werden, so daß das verzehrfertige gepuffte Getreideprodukt eine deutlich erhöhte Menge dieser Mikronährstoffe enthält, die ausreicht, um mit einer üblichen Verzehrmenge, z.B. 100 g Popcorn, den täglichen Bedarf an diesen für den Menschen essentiellen Substanzen ganz oder wenigstens zu einem nicht unerheblichen Teil abzudecken. Ferner soll das Verfahren möglichst einfach zu handhaben sein, so daß eine dosierte Zugabe der einzelnen mikronutritiven Komponenten während der Herstellung der gepufften Getreideprodukte in möglichst wenigen Schritten erfolgen und das Verfahren auch mit ungelerntem Personal durchgeführt werden kann.

Zur Lösung dieser Aufgabe wird erfindungsgemäß ein Verfahren zur Herstellung von modifizierten gepufften Getreideprodukten mit einem Gehalt an Lebensmittelzusatzstoffen vorgeschlagen, bei dem rohe Getreidekörner unter Einwirkung von Wärme, gegebenenfalls unter Rühren, in einem geeigneten Behälter gepufft werden, wobei die Zusatzstoffe mindestens während eines Teils der Puffzeit in dem Behälter vorliegen. Das Verfahren ist dadurch gekennzeichnet, daß vor oder während des Aufpuffens der rohen Getreidekörner als Lebensmittelzusatzstoffe eine vorbestimmte Menge an Mikronährstoffen, nämlich Vitamine und/oder Mineralstoffe und/oder Spurenelemente, für sich allein oder gelöst oder dispergiert in einer Trägersubstanz aus ein oder mehreren geeigneten tierischen und/oder pflanzlichen Fetten und/oder Ölen und/oder Zucker und/oder Kochsalz in den Behälter eingebracht und dort zusammen mit den Getreidekörnern 1 bis 5 min einer Behandlung entweder bei einer Temperatur im Bereich von 130 bis 280°C, vorzugsweise von 170 bis 240°C, oder mit Mikrowellen im Bereich von 400 bis 1500 Watt, vorzugsweise von 600 bis 800 Watt, unterworfen wird. Dabei wird zumindest ein wesentlicher Teil der eingesetzten Menge an Vitaminen und/oder Mineralstoffen und/oder Spurenelementen und, falls vorhanden, der Trägersubstanz von den aufzupuffenden Getreidekörnern aufgenommen und in ihnen gleichmäßig verteilt und ein verzehrfertiges, an Mikronährstoffen angereichertes gepufftes Getreideprodukt erhalten.

Der Nährwert eines in üblicher Weise unter Verwendung von Fett und Zucker hergestellten gepufften Getreideproduktes hängt von der eingesetzten Menge an Getreidekörnern, Fett und Zucker ab und liegt beispielsweise bei Verwendung von Maiskörnern bei einer Zusammensetzung des Popcorns von ca. 160 g Mais, 40 g Fett und 60 g Zucker bei etwa 2090 kJ pro 100 g Popcorn. Die Qualität des Popcorns wird jedoch nicht allein vom Nährwert, sondern, wie oben bereits erwähnt, auch von dessen Gehalt an Mikronährstoffen, d.h. dem Gehalt an Vitaminen, Mineralstoffen und Spurenelementen, bestimmt. Diese genannten Mikronährstoffe sind im herkömmlichen Popcorn nur in sehr geringen Mengen vorhanden, wie aus der nachfolgenden Tabelle I hervorgeht.

**Tabelle I**

| Mikronährstoffe | Ermittelte Menge pro 100g Popcorn | Empfohlene Tagesdosis |
|---|---|---|
| Vitamine: | | |
| C | 10 mg | 75 mg |
| E | 1,5 mg | 12 mg |
| A | <0,01 mg | 0,8 mg |
| B1 | 0,06 mg | 1,6 mg |
| B2 | 0,08 mg | 2,0 mg |
| B6 | 0,06 mg | 2,0 mg |
| B12 | 0,05 µg | 5,0 µg |
| Niacin | 0,2 mg | 18 mg |
| Pantothensäure | 0,05 mg | 6 mg |
| Folsäure | 0,001 mg | 0,4 mg |
| Biotin | 0,4 µg | 150 µg |

| Mineralstoffe und Spurenelemente: | | |
|---|---|---|
| Natrium | 0,8 mg | 1,5-4 g |
| Kalium | 200 mg | 1-3 g |
| Calcium | 3,2 mg | 800 mg |
| Magnesium | 48 mg | 300 mg |
| Phosphor | 240 mg | 800 mg |
| Eisen | 2,0 mg | 18 mg |
| Zink | 1,7 mg | 15 mg |
| Kupfer | 0,02 mg | 3 mg |
| Mangan | 0,8 mg | 4 mg |
| Chrom | 0,01 mg | 0,1 mg |
| Selen | <3,0 µg | 50 µg |

Die Ergebnisse wurden aus einem verzehrfertigen Popcorn gewonnen, das aus 6 Gewichtsteilen Mais, 2 Gewichtsteilen Fett und 3 Gewichtsteilen Zucker hergestellt wurde. Das untersuchte Popcornprodukt enthielt die in Tabelle I angegebenen Mengen an mikronutritiven Komponenten, wobei zum Vergleich die empfohlene Tagesdosis der entsprechenden Komponenten angegeben ist.

Aus Tabelle I geht hervor, daß die in 100 g Popcorn ermittelten Mengen an Mikronährstoffen nur einen Bruchteil des empfohlenen täglichen Bedarfs ausmachen, so daß das Verzehren von z.B. 100 g Popcorn lediglich minimal zur Deckung des täglichen Bedarfs an Mikronährstoffen beiträgt.

Überraschenderweise wurde festgestellt, daß Popcorn mit Vitaminen, Mineralstoffen und Spurenelementen in ausreichender Menge angereichert werden kann, wenn dafür gesorgt wird, daß diese Mikronährstoffe entweder direkt, vorzugsweise mittels einer Dosiereinrichtung, in vorbestimmter Menge in den Behälter eingebracht werden, und zwar vorzugsweise kurz vor dem Aufpuffen oder spätestens während des Aufpuffens, so daß die Mikronährstoffe unmittelbar nach der Zugabe von den aufpuffenden Getreidekörnern zumindest zu einem wesentlichen Teil aufgenommen werden können, oder vorher in einer geeigneten Trägersubstanz gelöst oder dispergiert werden und erst danach zusammen mit der Trägersubstanz vor oder während des Aufpuffens den rohen Getreidekörnern zugesetzt werden. Obwohl das Aufpuffen der Getreidekörner in einem offenen oder bedeckten Röstkessel bei einer Temperatur im Bereich von 130 bis 280°C oder mit Mikrowellen im Bereich von 400 bis 1500 Watt stattfindet, geht bei Einhaltung der Bedingungen des erfindungsgemäßen Verfahrens ein erstaunlich hoher prozentualer Anteil der eingesetzten Mikronährstoffe unversehrt auf das gepuffte Getreideprodukt über, wobei diese sich, gegebenenfalls zusammen mit der Trägersubstanz, auf dem gepufften Getreideprodukt im wesentlichen gleichmäßig verteilen. Die befürchtete Zersetzung bei den angewandten hohen Temperaturen oder der energiereichen Mikrowellenbestrahlung tritt hierbei überraschenderweise in einem weitaus geringeren Maße ein als erwartet. Dies gilt erstaunlicherweise auch in beträchtlichem Maße für thermisch besonders empfindliche Mikronährstoffe, wie z.B. Vitamin C.

Diese überraschenden Ergebnisse werden in den nachfolgenden Beispielen durch Vergleich der zugesetzten Mengen der Mikronährstoffkomponenten zu den Getreidekörnern vor oder während des Aufpuffens mit den auf dem fertigen gepufften Getreideprodukt aufgezogenen wirksamen Mengen dieser Komponenten deutlich demonstriert.

Als Ausgangsmaterial für die erfindungsgemäße Herstellung von an Vitaminen, Mineralstoffen und/oder Spurenelementen angereicherten gepufften Getreideprodukten können grundsätzlich alle die Getreidearten dienen, deren Körner einen ausreichend hohen Wassergehalt aufweisen, so daß sie beim Erhitzen über den Siedepunkt des Wassers hinaus unter Volumenvergrößerung aufplatzen, d.h. aufgepufft werden können. Bevorzugt werden beim erfindungsgemäßen Verfahren als aufzupuffende Getreidekörner Mais-, Weizen- und/oder Reiskörner eingesetzt.

In einer besonderen Ausführungsform des erfindungsgemäßen Verfahrens, bei der die Mikronährstoffe für sich allein in den Behälter eingebracht werden, erfolgt vorzugsweise die direkte Einbringung der vorbestimmten Menge an Vitaminen und/oder Mineralstoffen und/oder Spurenelementen in den Behälter mittels einer Dosiereinrichtung.

Sollen die Mikronährstoffe vor der Einbringung in den Behälter in einer Trägersubstanz gelöst oder dispergiert werden, so benutzt man als Trägersubstanzen zweckmäßigerweise ein oder mehrere geeignete tierische und/oder pflanzliche Fette und/oder Öle und/oder Zucker und/oder Kochsalz. Besonders bevorzugt werden als tierisches Fett Butterfett und als Pflanzenfett bzw. Pflanzenöl Kokosfett, Palmkernfett, Rüböl, Kakaobutter, Baumwollsaatöl, Sonnenblumenöl, Sojaöl und/oder hydrierte pflanzliche Fette eingesetzt. Ganz besonders bevorzugt wird als Trägersubstanz eine Mischung aus 80 bis 97 Gew.-% Sojaöl und/oder Rüböl und/oder Kokosfett und/oder Sonnenblumenöl und 20 bis 3 Gew.-% Butterfett und/oder Kakaobutter und/oder hydrierte pflanzliche Fette eingesetzt.

In einer weiteren bevorzugten Ausführungsform wird als Trägersubstanz eine Mischung aus ein oder mehreren Fetten und/oder Ölen und einer Menge von 1 bis 6 Gew.-% Kochsalz, bezogen auf das Gesamtgewicht des fertigen gepufften Getreideproduktes, eingesetzt.

Da in manchen Regionen statt salzhaltiger Popcornprodukte solche mit einem süßen Geschmack bevorzugt werden, kann in dem erfindungsgemäßen Verfahren auch Zucker als Trägersubstanz eingesetzt werden, vorzugsweise Saccharose, insbesondere in Form von Kristallzucker, sowie Fructose und/oder Dextrose. Das erfindungsgemäße Verfahren kann auch mit Mischungen von Fett und/oder Öl mit Zucker durchgeführt werden, wobei das Gewichtsverhältnis von Fett und/oder Öl zu Zucker so ausgewählt werden muß, daß die resultierende Mischung die gewünschte Konsistenz aufweist und eine gute Verarbeitbarkeit im Rührgerät gewährleistet. In einer bevorzugten Ausführungsform wird eine Mischung von ein oder mehreren Fetten und/oder Ölen und Zucker im Gewichtsverhältnis 0,3:1 bis 5:1 eingesetzt, wobei besonders bevorzugt das Gewichtsverhältnis Fett und/oder Öl zu Zucker im Bereich von 0,5:1 bis 1:1 liegt. In einer ganz besonders bevorzugten Ausführungsform werden 2 Gewichtsteile Fett und/oder Öl und 3 Gewichtsteile Zucker eingesetzt, weil sich herausgestellt hat, daß diese Mischung besonders gut verarbeitbar ist.

Erfindungsgemäß werden als Vitamine vorzugsweise Niacin, Pantothensäure, Folsäure, Biotin, Vitamin A, B1, B2, B6, B12, Vitamin C und/oder Vitamin E eingesetzt, und zwar werden diese Vitamine bevorzugt jeweils in einer solchen Menge direkt oder der Trägersubstanz zugesetzt, daß das fertige gepuffte Getreideprodukt 10 bis 300%, besonders bevorzugt 20 bis 100% der empfohlenen Tagesdosis der Vitamine pro 100 g gepufftes Getreideprodukt, z.B. Popcorn, enthält.

An Mineralstoffen und Spurenelementen kommen grundsätzlich alle diejenigen für den Einsatz im erfindungsgemäßen Verfahren in Frage, die für die Ernährung und den Stoffwechsel des Menschen benötigt werden. Vorzugsweise werden an Mineralstoffen und Spurenelementen Natrium, Kalium, Calcium, Magnesium, Eisen, Zink, Kupfer, Mangan und/oder Chrom in Form von Carbonaten, Hydrogencarbonaten, Phosphaten, Hydrogenphosphaten, Chloriden, Sulfaten, Gluconaten und/oder Fettsäuresalzen und/oder Selen als Selenit oder Aminosäureselenverbindungen (sog. Selenhefen) eingesetzt.

Um den mit dem erfindungsgemäßen Verfahren verfolgten Zweck erreichen zu können, werden die Mineralstoffe und/oder Spurenelemente bevorzugt in einer solchen Menge direkt oder zusammen mit der Trägersubstanz den aufzupuffenden bzw. aufgepufften Getreidekörnern zugesetzt, daß das fertige gepuffte Getreideprodukt 10 bis 100% der empfohlenen Tagesdosis dieser Stoffe enthält.

In einer weiteren bevorzugten Ausführungsform des erfindungsgemäßen Verfahrens ist die zuzusetzende Menge an Vitaminen und/oder Mineralstoffen und/oder Spurenelementen bei einer Temperatur von 20 bis 90°C unter ständigem Rühren in der Trägersubstanz gelöst oder dispergiert worden, wobei das erhaltene homogenisierte Produkt, das sich nach dem Abkühlen bei 4°C bis Raumtemperatur längere Zeit, z.B. 3 Monate, lagern läßt, in vorbestimmter Menge den Getreidekörnern vorgelegt oder zugesetzt wird.

In einer anderen, ebenfalls bevorzugten Ausführungsform wird so vorgegangen, daß zunächst das Fett und/oder Öl auf 70 bis 90°C erwärmt, dann der Zucker und/oder das Kochsalz unter Rühren langsam zugegeben und die erhaltene Mischung unter weiterem Rühren homogenisiert worden ist, worauf bei einer Temperatur von 20 bis 90°C die vorbestimmten Mengen an Vitaminen, Mineralstoffen und/oder Spurenelementen zugegeben worden sind und die Gesamtmischung so lange gerührt worden ist, bis sie homogen ist, und daß das erhaltene homogenisierte Produkt den Getreidekörnern vorgelegt oder zugesetzt wird. Das homogenisierte Produkt kann bei Temperaturen von 4°C bis Raumtemperatur längere Zeit, z.B. 3 Monate, gelagert und bei Bedarf erfindungsgemäß eingesetzt werden.

Die Erfindung wird anhand von Beispielen weiter erläutert, wobei die in den Beispielen als Mikronährstoffe aufgeführten Metalle Natrium, Kalium usw. in Form von Carbonaten, Hydrogencarbonaten, Phosphaten, Hydrogenphosphaten, Chloriden, Sulfaten, Gluconaten und/oder Fettsäuresalzen und Selen als Selenit oder Aminosäureselenverbindungen eingesetzt werden.

### Beispiel 1

Zu 1 kg einer Fettmischung aus 90 Gew.-% Sonnenblumenöl und 10 Gew.-% Kakaobutter als Trägersubstanz wurden in einem mit einem Rührwerk ausgerüsteten, beheizbaren Kessel unter Rühren bei 30°C langsam die folgenden Mengen an Mikronährstoffen zugefügt:

| Mikronährstoffe | Zugesetzte Menge mg/kg Fett |
|---|---|
| Vitamin B1 | 46 |
| Vitamin B2 | 65 |
| Vitamin B6 | 58 |
| Vitamin B12 | 0,65 |
| Niacin | 578 |
| Pantothensäure | 195 |
| Folsäure | 4,6 |
| Biotin | 4,6 |
| Vitamin A | 32,5 |
| Vitamin E | 923 |
| Vitamin C | 2782 |
| | |
| Natrium | 5570 |
| Kalium | 7423 |
| Calcium | 6961 |
| Magnesium | 3250 |
| Eisen | 461 |
| Zink | 370 |
| Kupfer | 91 |
| Mangan | 46 |
| Chrom | 4,6 |

Die mikronutritiven Komponenten wurden in der Trägersubstanz gelöst bzw. dispergiert. Die Mischung wurde anschließend noch kurze Zeit weiter gerührt, bis sie homogenisiert war. Sie enthält die Mikronährstoffe in gleichmäßiger Verteilung, läßt sich abpacken, unter Kühlung bei 4°C bis Raumtemperatur mindestens drei Monate lagern und kann je nach Bedarf den einzelnen Herstellern von gepufften Getreideprodukten, z.B. von Popcorn, zugeliefert werden.

80 g des die Mikronährstoffe enthaltenden Fettgemisches wurden in einem beheizbaren Röstkessel mit Rührwerk und einem Röstvolumen von 1 l zusammen mit 120 g Zucker und 320 g rohen Maiskörnern bei 250°C bis zu 5 min lang unter Rühren vermischt und dabei die Maiskörner zum Puffen gebracht. Dabei wurden die Trägersubstanz aus Fett und Zucker und die darin enthaltenen Mikronährstoffe gleichmäßig verteilt von den aufgepufften Maiskörnern aufgenommen.

Das so hergestellte Popcorn wurde gemäß den von A.N. Sagredos, A. Hüttmann und R. Röttgermann in Fette, Seifen, Anstrichmittel 88, 581 (1986) sowie A.N. Sagredos und W. Hartfiel, Fat Sci. Technol. 92, 522 (1990) beschriebenen Methoden analysiert. Die dabei ermittelten Mengen an Mikronährstoffen im fertigen Popcornprodukt wurden zum Vergleich den dem Popcorn-Ansatz vor dem Aufpuffen zugesetzten Mengen an Mikronährstoffen gegenübergestellt. Die Ergebnisse sind in Tabelle II zusammengestellt.

Aus Tabelle II geht hervor, daß das erfindungsgemäß hergestellte Popcornprodukt mit den genannten Mikronährstoffen deutlich angereichert ist und daß von den zugesetzten Vitaminen, Mineralstoffen und Spurenelementen ein überraschend hoher prozentualer Anteil auf das fertige Popcornprodukt übergegangen ist.

Bei den in Tabelle II für Kalium, Magnesium, Zink und Mangan ermittelten Mengen im fertigen Popcornprodukt ergibt sich, daß diese Mengen höher liegen als die vorher dem Popcorn-Ansatz zugesetzten Mengen. Diese scheinbare Diskrepanz erklärt sich dadurch, daß das Popcorn von sich aus einen Gehalt an diesen genannten Mineralstoffen und Spurenelementen aufweist, der sich zu den zugefügten Mengen hinzuaddiert.

**Tabelle II**

| Mikronährstoffe | Zugesetzte Menge mg/100 g Popcornansatz | Ermittelte Menge mg/100 g Popcorn |
|---|---|---|
| Vitamin B1 | 0,71 | 0,45 |
| Vitamin B2 | 1,0 | 0,43 |
| Vitamin B6 | 0,89 | 0,81 |
| Vitamin B12 | 0,01 | 0,008 |
| Niacin | 8,9 | 8,7 |
| Pantothensäure | 3,0 | 2,01 |
| Folsäure | 0,071 | 0,043 |
| Biotin | 0,071 | 0,045 |
| Vitamin A | 0,50 | 0,35 |
| Vitamin E | 14,2 | 8,7 |
| Vitamin C | 42,8 | 15,0 |
| | | |
| Natrium | 85,7 | 62,5 |
| Kalium | 114,2 | 271,9 |
| Calcium | 107,1 | 80,4 |
| Magnesium | 50,0 | 88,0 |
| Eisen | 7,1 | 4,3 |
| Zink | 5,7 | 6,4 |
| Kupfer | 1,4 | 1,26 |
| Mangan | 0,71 | 0,82 |
| Chrom | 0,07 | 0,05 |

### Beispiel 2

Anstelle von Fett, wie in Beispiel 1, wurde diesmal Zucker als Trägersubstanz für die Mikronährstoffe eingesetzt.

In einem Kessel mit Rührwerk wurden bei Raumtemperatur unter ständigem Rühren zu 1 kg Kristallzucker langsam folgende Mengen an Mikronährstoffen zugesetzt und das Ganze homogenisiert:

| Mikronährstoffe | Zugesetzte Menge mg/kg Zucker |
|---|---|
| Vitamin B1 | 30 |
| Vitamin B2 | 43 |
| Vitamin B6 | 38 |
| Vitamin B12 | 0,43 |
| Niacin | 385 |
| Pantothensäure | 130 |
| Folsäure | 3 |
| Biotin | 3 |
| Vitamin A | 22 |
| Vitamin E | 615 |
| Vitamin C | 1854 |
| | |
| Natrium | 3714 |
| Kalium | 4948 |
| Calcium | 4641 |
| Magnesium | 2166 |
| Eisen | 307 |
| Zink | 247 |
| Kupfer | 60 |
| Mangan | 30 |
| Chrom | 3 |

Man erhielt ein lagerfähiges Zuckerprodukt, in dem die Mikronährstoffe gleichmäßig verteilt sind.

Zur Herstellung eines Popcornproduktes mit angereicherten Mikronährstoffen wurden in einem auf 230°C aufgeheizten Röstkessel mit Rührwerk 80 g einer Fettmischung aus 5 Gew. -% Butterfett und 95 Gew.-% Sojaöl mit 120 g des vorgenannten, die Mikronährstoffe enthaltenden Zuckerproduktes und mit 320g rohen Maiskörnern 5 min lang vermischt. Dabei wurden die Mikronährstoffe zusammen mit der eingesetzten Fettmischung und dem Zucker ziemlich gleichmäßig von den aufgepufften Maiskörnern aufgenommen.

Die Analyse des so vitaminierten und an Mineralstoffen und Spurenelementen angereicherten Popcorns wurde nach den gleichen Methoden wie in Beispiel 1 durchgeführt und ergab die in Tabelle III zusammengestellten Resultate.

**Tabelle III**

| Mikronährstoffe | Zugesetzte Menge mg/100 g Popcornansatz | Ermittelte Menge mg/100 g Popcorn |
|---|---|---|
| Vitamin B1 | 0,69 | 0,41 |
| Vitamin B2 | 0,99 | 0,52 |
| Vitamin B6 | 0,87 | 0,83 |
| Vitamin B12 | 0,01 | 0,007 |
| Niacin | 8,9 | 8,4 |
| Pantothensäure | 3,0 | 1,65 |
| Folsäure | 0,069 | 0,032 |
| Biotin | 0,069 | 0,039 |
| Vitamin A | 0,50 | 0,31 |
| Vitamin E | 14,2 | 8,3 |
| Vitamin C | 42,8 | 16,3 |
| | | |
| Natrium | 85,7 | 75,1 |
| Kalium | 114,2 | 233,6 |
| Calcium | 107,1 | 79,0 |
| Magnesium | 50,0 | 90,5 |
| Eisen | 7,1 | 5,4 |
| Zink | 5,7 | 6,6 |
| Kupfer | 1,38 | 1,2 |
| Mangan | 0,69 | 0,76 |
| Chrom | 0,069 | 0,04 |

Auch hier liegen aus den in Beispiel 1 angegebenen Gründen die im fertigen Popcornprodukt ermittelten Mengen für Kalium, Magnesium, Zink und Mangan höher als die entsprechenden, dem Popcorn-Ansatz zugesetzten Mengen.

### Beispiel 3:

Es wurden 400 g einer Mischung aus 90 Gew.-% Kokosfett und 10 Gew.-% Kakaobutter und Butterfett zu gleichen Anteilen in einem beheizbaren Rührkessel auf 90°C erwärmt und dann 600 g Kristallzucker langsam unter Rühren zugesetzt. Die Mischung wurde bis zur Bildung einer homogenen Masse bei der gleichen Temperatur weiter gerührt. Anschließend wurden unter ständigem Rühren bei Raumtemperatur langsam die folgenden Mengen an Mikronährstoffen der Mischung zugefügt:

| Mikronährstoffe | Zugesetzte Menge mg/kg Fett-Zucker-Mischung |
|---|---|
| Vitamin B1 | 20 |
| Vitamin B2 | 28 |
| Vitamin B6 | 25 |
| Vitamin B12 | 0,3 |
| Niacin | 250 |
| Pantothensäure | 85 |
| Folsäure | 2,0 |
| Biotin | 2,0 |
| Vitamin A | 14 |
| Vitamin E | 400 |
| Vitamin C | 1200 |
| | |
| Natrium | 2400 |
| Kalium | 3200 |
| Calcium | 3000 |
| Magnesium | 1400 |
| Eisen | 200 |
| Zink | 160 |
| Kupfer | 40 |
| Mangan | 20 |
| Chrom | 2 |

Die Mikronährstoffe wurden durch intensives Rühren in der Fett-Zucker-Mischung gelöst bzw. dispergiert. Es wurde ein die Mikronährstoffe in gleichmäßiger Verteilung enthaltendes homogenes Fett-Zucker-Gemisch erhalten, das bei 4°C bis Raumtemperatur mindestens 3 Monate lang lagerfähig ist und bei Bedarf den Herstellern von gepufften Getreideprodukten zugeliefert werden kann.

200 g des Fett-Zucker-Gemisches mit den Mikronährstoffen wurden in einem Röstkessel mit Rührwerk zusammen mit 320 g rohen Maiskörnern bei 180°C unter ständigem Rühren vermischt und dabei die Maiskörner zum Puffen gebracht. Die Fett-Zucker-Mischung mit den Mikronährstoffen wurde von den gepufften Maiskörnern gleichmäßig aufgenommen.

Die Analyse des so vitaminierten und an Mineralstoffen und Spurenelementen angereicherten Popcorns wurde nach den in Beispiel 1 angegebenen Methoden durchgeführt und ergab die in Tabelle IV zusammengestellten Resultate.

**Tabelle IV**

| Mikronährstoffe | Zugesetzte Menge mg/100 g Popcornansatz | Ermittelte Menge mg/100 g Popcorn |
|---|---|---|
| Vitamin B1 | 0,77 | 0,49 |
| Vitamin B2 | 1,07 | 0,45 |
| Vitamin B6 | 0,96 | 0,56 |
| Vitamin B12 | 0,011 | 0,008 |
| Niacin | 9,6 | 8,5 |
| Pantothensäure | 3,2 | 1,5 |
| Folsäure | 0,077 | 0,031 |
| Biotin | 0,077 | 0,042 |
| Vitamin A | 0,54 | 0,29 |
| Vitamin E | 15,3 | 7,8 |
| Vitamin C | 46,2 | 17,1 |
| | | |
| Natrium | 92,3 | 67,6 |
| Kalium | 123,0 | 243,5 |
| Calcium | 115,3 | 79,7 |
| Magnesium | 53,8 | 85,0 |
| Eisen | 7,6 | 5,9 |
| Zink | 6,1 | 7,1 |
| Kupfer | 1,5 | 1,5 |
| Mangan | 0,77 | 0,85 |
| Chrom | 0,077 | 0,05 |

Die bei Kalium, Magnesium, Zink und Mangan ermittelten höheren Mengen im Vergleich zu den entsprechenden, dem Popcorn-Ansatz zugesetzten Mengen sind wiederum auf die bereits im Popcorn vorhandenen Grundgehalte an diesen Mineralstoffen zurückzuführen.

### Beispiel 4:

Zu 1 kg einer Fettmischung aus 85 Gew.-% Rüböl und 15 Gew. -% Kakaobutter und Butterfett zu gleichen Anteilen als Trägersubstanz wurden unter den gleichen Bedingungen wie in Beispiel 1 die folgenden Mengen an Vitaminen zugefügt:

| Vitamine | Zugesetzte Menge mg/kg Fett |
|---|---|
| Vitamin B1 | 50 |
| Vitamin B2 | 70 |
| Vitamin B6 | 62 |
| Vitamin B12 | 0,075 |
| Niacin | 625 |
| Pantothensäure | 212 |
| Folsäure | 5,0 |
| Biotin | 5,0 |
| Vitamin A | 35 |
| Vitamin E | 1000 |
| Vitamin C | 3000 |

Die Vitamine wurden in der Trägersubstanz gelöst bzw. dispergiert und die Mischung anschließend noch kurze Zeit weiter gerührt, bis sie homogenisiert war.

160 g des die Vitamine enthaltenden Fettgemisches wurden in einem wie in Beispiel 1 beschriebenen Röstkessel, der auf 230°C vorgeheizt worden war, unter ständigem Rühren mit 360g rohen Maiskörnern und 40 g Kochsalz 4 Minuten lang vermischt und dabei die Maiskörner aufgepufft. Das Fettgemisch mit den Vitaminen und dem Kochsalz wurde gleichmäßig verteilt von den gepufften Maiskörnern aufgenommen.

Das erhaltene Popcornprodukt wurde gemäß den in Beispiel 1 angegebenen Methoden analysiert. Die dabei erhaltenen Ergebnisse sind in Tabelle V zusammengestellt.

**Tabelle V**

| Vitamine | Zugesetzte Menge mg/100 g Popcornansatz | Ermittelte Menge mg/100 g Popcorn |
|---|---|---|
| Vitamin B1 | 1,4 | 0,91 |
| Vitamin B2 | 2,0 | 1,1 |
| Vitamin B6 | 1,77 | 1,69 |
| Vitamin B12 | 0,002 | 0,002 |
| Niacin | 17,8 | 15,7 |
| Pantothensäure | 6,0 | 3,2 |
| Folsäure | 0,14 | 0,07 |
| Biotin | 0,14 | 0,08 |
| Vitamin A | 1,0 | 0,4 |
| Vitamin E | 28,5 | 19,2 |
| Vitamin C | 85,7 | 33,9 |

Die Tabelle V zeigt, daß mit dem erfindungsgemäßen Verfahren Popcornprodukte mit den eingesetzten Vitaminen deutlich angereichert werden können.

### Beispiel 5

Es wurde, wie im Beispiel 3 beschrieben, eine Fett-Zucker-Mischung mit Mikronährstoffen versehen, wobei 500 g einer Mischung aus 97 Gew.-% Sojaöl und 3 Gew.-% Butterfett mit 500 g Kristallzucker vermischt und der Mischung die auf der nächsten Seite zusammengestellten Mengen an Mikronährstoffen zugefügt wurden.

Die so erhaltene homogene Fett-Zucker-Mischung mit einem Gehalt an Mikronährstoffen wurde zur Herstellung von mit diesen Stoffen angereicherten, durch die Einwirkung von Mikrowellenenergie erzeugten gepufften Weizenkörnern eingesetzt.

Zu diesem Zweck wurden 20 g des die Mikronährstoffe enthaltenden Fett-Zucker-Gemisches bei Raumtemperatur mit 40 g rohen Weizenkörnern unter Rühren gut vermischt. Das resultierende Gemisch, in dem die rohen Weizenkörner möglichst gleichmäßig verteilt waren, wurde in einen für die Behandlung mit Mikrowellen geeigneten Beutel gefüllt. Der Beutel wurde anschließend versiegelt, in einen Mikrowellenofen gestellt und bei 600 bis 800 Watt ca. 3 min erhitzt, wobei die Weizenkörner in dem Beutel aufgepufft und die Fett-Zucker-Mischung mit den Mikronährstoffen von den gepufften Weizenkörnern gleichmäßig aufgenommen wurden.

| Mikronährstoffe | Zugesetzte Menge mg/kg Fett-Zucker-Mischung. |
|---|---|
| Vitamin B1 | 48 |
| Vitamin B2 | 48 |
| Vitamin B6 | 48 |
| Vitamin B12 | 0,15 |
| Niacin | 540 |
| Pantothensäure | 200 |
| Folsäure | 18 |
| Biotin | 1,8 |
| Vitamin A | 36 |
| Vitamin E | 480 |
| Vitamin C | 3000 |
| | |
| Natrium | 7500 |
| Kalium | 7500 |
| Calcium | 7500 |
| Magnesium | 4500 |
| Eisen | 300 |
| Zink | 300 |
| Kupfer | 90 |
| Mangan | 90 |
| Chrom | 6 |
| Selen | 3 |

Das so hergestellte gepuffte Weizenprodukt wurde nach den in Beispiel 1 angegebenen Methoden analysiert. Die Ergebnisse sind in der nachfolgenden Tabelle VI zusammengestellt.

**Tabelle VI**

| Mikronährstoffe | Zugesetzte Menge mg/100g Weizenkörner | Ermittelte Menge mg/100g gep.Weizenk |
|---|---|---|
| Vitamin B1 | 1,6 | 1,2 |
| Vitamin B2 | 1,6 | 0,7 |
| Vitamin B6 | 1,6 | 1,0 |
| Vitamin B12 | 0,005 | 0,003 |
| Niacin | 18 | 16,6 |
| Pantothensäure | 6,6 | 4,7 |
| Folsäure | 0,6 | 0,4 |
| Biotin | 0,06 | 0,05 |
| Vitamin A | 1,2 | 0,63 |
| Vitamin E | 16 | 8,5 |
| Vitamin C | 100 | 41 |
| | | |
| Natrium | 250 | 220 |
| Kalium | 250 | 415 |
| Calcium | 250 | 237 |
| Magnesium | 150 | 187 |
| Eisen | 10 | 6,8 |
| Zink | 10 | 7,2 |
| Kupfer | 3 | 2,3 |
| Mangan | 3 | 2,8 |
| Chrom | 0,2 | 0,08 |
| Selen | 0,1 | 0,04 |

Wie die Ergebnisse der Tabelle VI zeigen, können mit dem erfindungsgemäßen Verfahren auch mit essentiellen Mikronährstoffen angereicherte gepuffte Weizenprodukte hergestellt werden, wobei die zugesetzten Mikronährstoffe nach einer Behandlung mit Mikrowellen, bei der die Weizenkörner aufgepufft werden, zu einem hohen prozentualen Anteil in dem aufgepufften Produkt erhalten bleiben.

### Beispiel 6:

Es wurden 400 g Palmkernfett in einem beheizbaren Rührkessel auf 90°C erwärmt und dann 600 g Kristallzucker langsam unter Rühren zugesetzt. Die Mischung wurde bis zur Bildung einer homogenen Masse bei der gleichen Temperatur weiter gerührt. Anschließend wurden unter ständigem Rühren bei Raumtemperatur langsam die folgenden Mengen an Mikronährstoffen der Mischung zugefügt:

| Mikronährstoffe | Zugesetzte Menge mg/kg Fett-Zucker-Mischung. |
|---|---|
| Vitamin B1 | 20 |
| Vitamin B2 | 28 |
| Vitamin B6 | 25 |
| Vitamin B12 | 0,3 |
| Niacin | 250 |
| Pantothensäure | 85 |
| Folsäure | 2,0 |
| Biotin | 2,0 |
| Vitamin A | 14 |
| Vitamin E | 400 |
| Vitamin C | 1200 |
| | |
| Natrium | 2400 |
| Kalium | 3200 |
| Calcium | 3000 |
| Magnesium | 1400 |
| Eisen | 200 |
| Zink | 160 |
| Kupfer | 40 |
| Mangan | 20 |
| Chrom | 2 |

Die Mikronährstoffe wurden durch intensives Rühren in der Fett-Zucker-Mischung gelöst bzw. dispergiert, wobei ein die Mikronährstoffe in gleichmäßiger Verteilung enthaltendes homogenes Fett-Zucker-Gemisch erhalten wurde, das bei 4°C bis Raumtemperatur mindestens 3 Monate lang lagerfähig ist und bei Bedarf den Herstellern von gepufften Getreideprodukten zugeliefert werden kann.

200 g des Fett-Zucker-Gemisches mit den Mikronährstoffen wurden in einem Röstkessel mit Rührwerk zusammen mit 320 g rohen Weizenkörnern bei 220°C unter ständigem Rühren vermischt und dabei die Weizenkörner zum Puffen gebracht. Die Fett-Zucker-Mischung mit den Mikronährstoffen wurde von den gepufften Weizenkörnern gleichmäßig aufgenommen.

Die Analyse des so vitaminierten und an Mineralstoffen und Spurenelementen angereicherten gepufften Weizenproduktes wurde nach den in Beispiel 1 angegebenen Methoden durchgeführt und ergab die in Tabelle VII zusammengestellten Resultate.

**Tabelle VII**

| Mikronährstoffe | Zugesetzte Menge mg/100g Weizenkörn. | Ermittelte Menge mg/100g gep.Weizenk. |
|---|---|---|
| Vitamin B1 | 0,77 | 0,54 |
| Vitamin B2 | 1,07 | 0,41 |
| Vitamin B6 | 0,96 | 0,62 |
| Vitamin B12 | 0,011 | 0,007 |
| Niacin | 9,6 | 9,4 |
| Pantothensäure | 3,2 | 1,8 |
| Folsäure | 0,077 | 0,038 |
| Biotin | 0,077 | 0,061 |
| Vitamin A | 0,54 | 0,25 |
| Vitamin E | 15,3 | 8,9 |
| Vitamin C | 46,2 | 21,2 |
| | | |
| Natrium | 92,3 | 72,3 |
| Kalium | 123,0 | 190,1 |
| Calcium | 115,3 | 86,7 |
| Magnesium | 53,8 | 79,9 |
| Eisen | 7,6 | 5,0 |
| Zink | 6,1 | 6,3 |
| Kupfer | 1,5 | 1,1 |
| Mangan | 0,77 | 0,62 |
| Chrom | 0,077 | 0,03 |

Die bei Kalium und Magnesium ermittelten höheren Mengen im Vergleich zu den entsprechenden, dem Weizenkörner-Ansatz zugesetzten Mengen sind wiederum auf die bereits im gepufften Weizenprodukt vorhandenen Grundgehalte an diesen Mineralstoffen zurückzuführen.

### Beispiel 7

Es wurde, wie im Beispiel 3 beschrieben, eine Fett-Zucker-Mischung mit Mikronährstoffen versehen, wobei 500 g halbhydriertes Pflanzenöl mit 500 g Kristallzucker vermischt und der Mischung die folgenden Mengen an Mikronährstoffen zugefügt wurden:

| Mikronährstoffe | Zugesetzte Menge mg/kg Fett-Zucker-Mischung. |
|---|---|
| Vitamin B1 | 48 |
| Vitamin B2 | 48 |
| Vitamin B6 | 48 |
| Vitamin B12 | 0,15 |
| Niacin | 540 |
| Pantothensäure | 200 |
| Folsäure | 18 |
| Biotin | 1,8 |
| Vitamin A | 36 |
| Vitamin E | 480 |
| Vitamin C | 3000 |
| | |
| Natrium | 7500 |
| Kalium | 7500 |
| Calcium | 7500 |
| Magnesium | 4500 |
| Eisen | 300 |
| Zink | 300 |
| Kupfer | 90 |
| Mangan | 90 |
| Chrom | 6 |
| Selen | 3 |

Die so erhaltene homogene Fett-Zucker-Mischung mit einem Gehalt an Mikronährstoffen wurde zur Herstellung von mit Mikronährstoffen angereichertem Popcorn eingesetzt, das durch die Einwirkung von Mikrowellen erzeugt wurde.

Zu diesem Zweck wurden 20 g des die Mikronährstoffe enthaltenden Fett-Zucker-Gemisches bei Raumtemperatur mit 40 g rohen Maiskörnern unter Rühren gut vermischt. Das resultierende Gemisch, in dem die rohen Maiskörner möglichst gleichmäßig verteilt waren, wurde in einen für die Behandlung mit Mikrowellen geeigneten Beutel gefüllt. Der Beutel wurde anschließend versiegelt, in einen Mikrowellenofen gestellt und bei 600 bis 800 Watt ca. 3 min erhitzt, wobei die Maiskörner in dem Beutel aufgepufft und die Fett-Zucker-Mischung mit den Mikronährstoffen von den gepufften Maiskörnern gleichmäßig aufgenommen wurden.

Das so hergestellte Mikrowellen-Popcorn wurde nach den in Beispiel 1 angegebenen Methoden analysiert. Die Ergebnisse sind in der nachfolgenden Tabelle VIII zusammengestellt.

**Tabelle VIII**

| Mikronährstoffe | Zugesetzte Menge mg/100 g Popcornansatz | Ermittelte Menge mg/100 g Popcorn |
|---|---|---|
| Vitamin B1 | 1,6 | 1,1 |
| Vitamin B2 | 1,6 | 0,85 |
| Vitamin B6 | 1,6 | 0,92 |
| Vitamin B12 | 0,005 | 0,0027 |
| Niacin | 1.8 | 17,5 |
| Pantothensäure | 6,6 | 4,0 |
| Folsäure | 0,6 | 0,44 |
| Biotin | 0,06 | 0,056 |
| Vitamin A | 1,2 | 0,57 |
| Vitamin E | 1.6 | 10,3 |
| Vitamin C | 100 | 35 |
| | | |
| Natrium | 250 | 235 |
| Kalium | 250 | 387 |
| Calcium | 250 | 222 |
| Magnesium | 150 | 198 |
| Eisen | 10 | 5,3 |
| Zink | 10 | 8,1 |
| Kupfer | 3 | 2,8 |
| Mangan | 3 | 2,4 |
| Chrom | 0,2 | 0,11 |
| Selen | 0,1 | 0,03 |

Wie die Ergebnisse der Tabelle VIII zeigen, können mit dem erfindungsgemäßen Verfahren auch mit essentiellen Mikronährstoffen angereicherte Popcornprodukte hergestellt werden, wobei die zugesetzten Mikronährstoffe nach einer Behandlung mit Mikrowellen, bei der die Maiskörner aufgepufft werden, zu einem hohen prozentualen Anteil in dem gepufften Produkt erhalten bleiben.

### Beispiel 8

Es wurde eine pulverförmige Mischung von Mikronährstoffen der folgenden Zusammensetzung hergestellt:

| Mikronährstoffe | Menge (in g) |
|---|---|
| Vitamin B1 | 3,0 |
| Vitamin B2 | 4,3 |
| Vitamin B6 | 3,8 |
| Vitamin B12 | 0,043 |
| Niacin | 38,5 |
| Pantothensäure | 13,0 |
| Folsäure | 0,3 |
| Biotin | 0,3 |
| Vitamin A | 2,2 |
| Vitamin E | 61,5 |
| Vitamin C | 185,4 |
| | |
| Natrium | 371,4 |
| Kalium | 494,8 |
| Calcium | 464,1 |
| Magnesium | 216,6 |
| Eisen | 30,7 |
| Zink | 24,7 |
| Kupfer | 6,0 |
| Mangan | 3,0 |
| Chrom | 0,3 |

In einem auf 230°C aufgeheizten Röstkessel mit Rührwerk wurden zunächst 80 g einer Fettmischung aus 5 Gew.-% Butterfett und 95 Gew.-% Sojaöl mit 120 g Kristallzucker und 320 g rohen Maiskörnern 5 min lang vermischt. Zu dem Zeitpunkt kurz vor dem Aufpuffen oder spätestens während des Aufpuffens wurde eine vorbestimmte Menge der oben angegebenen Mikronährstoffmischung mittels eines Dosiergerätes in den Röstkessel unter Rühren eingegeben. Dabei wurden die Mikronährstoffe zusammen mit der eingesetzten Fett-Zucker-Mi-schung gleichmäßig von den aufpuffenden Maiskörnern aufgenommen.

Die Analyse des so vitaminierten und an Mineralstoffen und Spurenelementen angereicherten Popcorns wurde nach den gleichen Methoden wie in Beispiel 1 durchgeführt und ergab die in Tabelle IX zusammengestellten Resultate.

**Tabelle IX**

| Mikronährstoffe | Zugesetzte Menge mg/100 g Popcornansatz | Ermittelte Menge mg/100 g Popcorn |
|---|---|---|
| Vitamin B1 | 1,40 | 0,81 |
| Vitamin B2 | 1,98 | 0,78 |
| Vitamin B6 | 1,74 | 1,56 |
| Vitamin B12 | 0,02 | 0,015 |
| Niacin | 17,8 | 16,8 |
| Pantothensäure | 6,0 | 3,69 |
| Folsäure | 0,138 | 0,075 |
| Biotin | 0,138 | 0,080 |
| Vitamin A | 1,0 | 0,72 |
| Vitamin E | 28,4 | 18,5 |
| Vitamin C | 85,6 | 34,2 |
| | | |
| Natrium | 171,4 | 150,8 |
| Kalium | 228,4 | 478,0 |
| Calcium | 214,2 | 169,3 |
| Magnesium | 100,0 | 130,5 |
| Eisen | 14,2 | 10,8 |
| Zink | 11,4 | 12,4 |
| Kupfer | 2,76 | 2,62 |
| Mangan | 1,38 | 1,46 |
| Chrom | 0,138 | 0,07 |

Auch hier liegen aus den in Beispiel 1 angegebenen Gründen die im fertigen Popcornprodukt ermittelten Mengen für Kalium, Magnesium, Zink und Mangan höher als die entsprechenden, dem Popcorn-Ansatz zugesetzten Mengen.

## Patentansprüche

1. Verfahren zur Herstellung von modifizierten gepufften Getreideprodukten mit einem Gehalt an Lebensmittelzusatzstoffen, bei dem rohe Getreidekörner unter Einwirkung von Wärme, gegebenenfalls unter Rühren, in einem geeigneten Behälter gepufft werden, wobei die Zusatzstoffe mindestens während eines Teils der Puffzeit in dem Behälter vorliegen, **dadurch gekennzeichnet, daß** vor oder während des Aufpuffens der rohen Getreidekörner als Lebensmittelzusatzstoffe eine vorbestimmte Menge an Mikronährstoffen, nämlich Vitamine und/oder Mineralstoffe und/oder Spurenelemente, für sich allein oder gelöst oder dispergiert in einer Trägersubstanz aus ein oder mehreren geeigneten tierischen und/oder pflanzlichen Fetten und/oder Ölen und/oder Zucker und/oder Kochsalz in den Behälter eingebracht und dort zusammen mit den Getreidekörnern 1 bis 5 min einer Behandlung entweder bei einer Temperatur im Bereich von 130 bis 280°C oder mit Mikrowellen im Bereich von 400 bis 1500 Watt unterworfen wird.

2. Verfahren nach Anspruch 1, **dadurch gekennzeichnet, daß** als aufzupuffende Getreidekörner Mais-, Weizen- und/oder Reiskörner eingesetzt werden.

3. Verfahren nach Anspruch 1 oder 2, **dadurch gekennzeichnet, daß** eine direkte Einbringung der vorbestimmten Menge an Vitaminen und/oder Mineralstoffen und/oder Spurenelementen in den Behälter mittels einer Dosiereinrichtung erfolgt.

4. Verfahren nach Anspruch 1, **dadurch gekennzeichnet, daß** als tierisches Fett Butterfett eingesetzt wird.

5. Verfahren nach Anspruch 1, **dadurch gekennzeichnet, daß** als Pflanzenfett bzw. Pflanzenöl Kokosfett, Palmkernfett, Rüböl, Kakaobutter, Baumwollsaatöl, Sonnenblumenöl, Sojaöl und/oder hydrierte pflanzliche Fette eingesetzt werden.

6. Verfahren nach Anspruch 1, **dadurch gekennzeichnet, daß** als Trägersubstanz eine Mischung aus 80 bis 97 Gew.-% Sojaöl und/oder Rüböl und/oder Kokosfett und/oder Sonnenblumenöl und 20 bis 3 Gew.-% Butterfett und/oder Kakaobutter und/oder hydrierte pflanzliche Fette eingesetzt wird.

7. Verfahren nach Anspruch 1, **dadurch gekennzeichnet, daß** als Trägersubstanz eine Mischung aus ein oder mehreren Fetten und/oder Ölen und einer Menge von 1 bis 6 Gew.-% Kochsalz, bezogen auf das Gesamtgewicht des fertigen gepufften Getreideproduktes, eingesetzt wird.

8. Verfahren nach Anspruch 1, **dadurch gekennzeichnet, daß** als Zucker Saccharose, Fructose und/oder Dextrose eingesetzt werden.

9. Verfahren nach einem der vorhergehenden Ansprüche, **dadurch gekennzeichnet, daß** eine Mischung von ein oder mehreren Fetten und/oder Ölen und Zucker im Gewichtsverhältnis 0,3:1 bis 5:1 eingesetzt wird.

10. Verfahren nach Anspruch 9, **dadurch gekennzeichnet, daß** 2 Gewichtsteile Fett und/oder Öl und 3 Gewichtsteile Zucker eingesetzt werden.

11. Verfahren nach den Ansprüchen 1 bis 10, **dadurch gekennzeichnet, daß** an Vitaminen Niacin, Pantothensäure, Folsäure, Biotin, Vitamin A, B1, B2, B6, B12, C und/oder E eingesetzt werden.

12. Verfahren nach Anspruch 11, **dadurch gekennzeichnet, daß** die Vitamine jeweils in einer solchen Menge direkt oder zusammen mit der Trägersubstanz den aufzupuffenden Getreidekörnern zugesetzt werden, daß das fertige gepuffte Getreideprodukt 10 bis 300% der empfohlenen Tagesdosis dieser Vitamine pro 100 g fertiges Produkt enthält.

13. Verfahren nach den Ansprüchen 1 bis 12, **dadurch gekennzeichnet, daß** an Mineralstoffen und Spurenelementen Natrium, Kalium, Calcium, Magnesium, Eisen, Zink, Kupfer, Mangan und/oder Chrom in Form von Carbonaten, Hydrogencarbonaten, Phosphaten, Hydrogenphosphaten, Chloriden, Sulfaten, Gluconaten und/oder eines Fettsäuresalzes und/oder Selen als Selenit oder Aminosäureselenverbindungen eingesetzt werden.

14. Verfahren nach Anspruch 13, **dadurch gekennzeichnet, daß** die Mineralstoffe und/oder Spurenelemente jeweils in einer solchen Menge direkt oder zusammen mit der Trägersubstanz den aufzupuffenden Getreidekörnern zugesetzt werden, daß das fertige gepuffte Getreideprodukt 10 bis 100% der empfohlenen Tagesdosis dieser Stoffe enthält.

15. Verfahren nach Anspruch 1, **dadurch gekennzeichnet, daß** die zuzusetzende Menge an Vitaminen und/oder Mineralstoffen und/oder Spurenelementen bei einer Temperatur von 20 bis 90°C unter ständigem Rühren in der Trägersubstanz gelöst oder dispergiert worden ist, und daß das erhaltene homogenisierte Produkt den Getreidekörnern vorgelegt oder zugesetzt wird.

16. Verfahren nach Anspruch 1, **dadurch gekennzeichnet, daß** zunächst das Fett und/oder Öl auf 70 bis 90°C erwärmt, dann der Zucker und/oder das Kochsalz unter Rühren langsam zugegeben und die erhaltene Mischung unter weiterem Rühren homogenisiert worden ist, worauf bei einer Temperatur von 20 bis 90°C die Vitamine, Mineralstoffe und/oder Spurenelemente zugegeben worden sind und die Gesamtmischung so lange gerührt worden ist, bis sie homogen ist, und daß das erhaltene homogenisierte Produkt den Getreidekörnern vorgelegt oder zugesetzt wird.

## Claims

1. Process for producing modified puffed cereal products containing food additives, in which raw cereal grains are swelled under the action of heat, optionally with stirring, in a suitable container, wherein the additives are present in the container at least during a part of the swelling time, **characterised in that** before or during the swelling of the raw cereal grains a predetermined quantity of micro-nutrients, namely vitamins and/or minerals and/or trace elements, is introduced into the container as foodstuff additives alone or dissolved or dispersed in a carrier substance consisting of one or more suitable animal and/or plant fats and/or oils and/or sugar and/or table salt and is there subjected together with the cereal grains to 1 to 5 minutes of a treatment either at a temperature in the region of 130 to 280°C or with microwaves in the region of 400 to 1500 watts.

2. Process according to claim 1, **characterised in that** maize, wheat and/or rice grains are used as cereal grains to be swelled.

3. Process according to claim 1 or 2, **characterised in that** a direct introduction of the predetermined quantity of vitamins and/or minerals and/or trace elements into the container is carried out by means of a metering device.

4. Process according to claim 1, **characterised in that** butter fat is used as animal fat.

5. Process according to claim 1, **characterised in that** coconut oil, palm nut oil, rape seed oil, cocoa butter, cotton seed oil, sunflower seed oil, soya bean oil and/or hydrated plant fat is or are used as plant fat or plant oil.

6. Process according to claim 1, **characterised in that** a mixture of 80 to 97 weight percent of soya bean oil and/or rape seed oil and/or coconut oil and/or sunflower seed oil and 20 to 3 weight percent of butter fat and/or cocoa butter and/or hydrated plant fat is used as carrier substance.

7. Process according to claim 1, **characterised in that** a mixture of one or more fats and/or oils and a quantity of 1 to 6 weight percent of table salt referred to the total weight of the finished puffed cereal product is used as carrier substance.

8. Process according to claim 1, **characterised in that** saccharose, fructose and/or dextrose is used as sugar.

9. Process according to one of the preceding claims, **characterised in that** a mixture of one or more fats and/or oils and sugar is used in a weight ratio of 0.3:1 to 5:1.

10. Process according to claim 9, **characterised in that** 2 parts by weight of fat and/or oil and 3 parts by weight of sugar are used.

11. Process according to claims 1 to 10, **characterised in that** nicotinic acid, pantothenic acid, folinic acid, biotin, vitamin A, vitamin B1, vitamin B2, vitamin B6, vitamin B12, vitamin C and/or vitamin E is or are used as vitamins.

12. Process according to claim 1, **characterised in that** the vitamins are added in each case in such a quantity directly or together with the carrier substance to the cereal grains to be swelled that the finished puffed cereal product contains 10 to 300% of the recommended daily dose of these vitamins per 100 grams of finished product.

13. Process according to claims 1 to 12, **characterised in that** sodium, potassium, calcium, magnesium, iron, zinc, copper, manganese and/or chromium in the form of carbonates, hydrogen carbonates, phosphates, hydrogen phosphates, chlorides, sulfates, gluconates and/or a fatty acid salt and/or selenium as selenite or amino acid selenium compounds is or are used as minerals and trace elements.

14. Method according to claim 13, **characterised in that** the minerals and/or trace elements are added in each case in such a quantity directly or together with the carrier substance to the cereal grains to be swelled that the finished puffed cereal product contains 10 to 100% of the recommended daily dose of these substances.

15. Process according to claim 1, **characterised in that** the quantities of vitamins and/or minerals and/or trace elements to be added have been dissolved or dispersed at a temperature of 20 to 90° C in the carrier substance under constant stirring and that the obtained homogenised product is introduced or added to the cereal grains.

16. Process according to claim 1, **characterised in that** initially the fat and/or oil was or were heated to 70 to 90° C, then the sugar and/or table salt was or were slowly added under stirring and the obtained mixture was homogenised under further stirring, whereupon the vitamins, minerals and/or trace elements were added at a temperature of 20 to 90° C and the entire mixture was stirred until it is homogeneous and the obtained homogenised product is introduced or added to the cereal grains.

## Revendications

1. Procédé de préparation de produits à base de céréales tamponnés modifiés avec une quantité d'additifs alimentaires, selon lequel des grains de céréales bruts sont tamponnés dans un conteneur approprié par action de chaleur, éventuellement sous agitation, les additifs étant présents au moins pendant une partie de la durée de tamponnage, **caractérisé en ce que**, avant ou après le tamponnage des grains de céréales bruts, on introduit dans le conteneur, comme additifs alimentaires, une quantité définie de micro-éléments nutritifs, à savoir des vitamines et/ou des matières minérales et/ou des oligo-éléments, seuls ou dissous ou dispersés dans une substance support constituée d'un ou de plusieurs parmi des graisses et/ou huiles animales et/ou végétales et/ou du sucre et/ou du sel, et on les soumet là avec les grains de céréales pendant 1 à 5 min à un traitement à une température dans la plage de 130 à 280°C ou par micro-ondes dans la plage de 400 à 1500 watts.

2. Procédé selon la revendication 1, **caractérisé en ce qu'**on utilise comme grains de céréales à tamponner des grains de maïs, de blé et/ou de riz.

3. Procédé selon la revendication 1 ou 2, **caractérisé en ce qu'**on fait une amenée directe de la quantité définie de vitamines et/ou de matières minérales et/ou d'oligo-éléments dans le conteneur au moyen d'un dispositif de dosage.

4. Procédé selon la revendication 1, **caractérisé en ce qu'**on utilise du beurre comme graisse animale.

5. Procédé selon la revendication 1, **caractérisé en ce qu'**on utilise comme graisse végétale ou comme huile végétale, la graisse de noix de coco, la graisse de palmiste, l'huile de colza, le beurre de cacao, l'huile de coton, l'huile de tournesol, l'huile de soja et/ou des graisses végétales hydrogénés.

6. Procédé selon la revendication 1, **caractérisé en ce qu'**on utilise comme substance support un mélange de 80 à 97% en poids d'huile de soja et/ou d'huile de colza et/ou de graisse de noix de coco et/ou d'huile de tournesol et 20 à 3% en poids de beurre et/ou de beurre de cacao et/ou de graisses végétales hydrogénées.

7. Procédé selon la revendication 1, **caractérisé en ce qu'**on utilise comme substance support un mélange d'une ou de plusieurs graisses et/ou huiles et une quantité de 1 à 6% en poids de sel, rapporté au poids total du produit à base de céréales tamponné

8. Procédé selon la revendication 1, **caractérisé en ce qu'**on utilise comme sucre le saccharose, le fructose et/ou le dextrose.

9. Procédé selon l'une des revendications précédentes, **caractérisé en ce qu'**on utilise un mélange d'une ou de plusieurs graisses et/ou d'huiles et de sucre selon un rapport en poids de 0,3 : 1 à 5 : 1.

10. Procédé selon la revendication 9, **caractérisé en ce qu'**on utilise 2 parties en poids de graisse et/ou d'huile et 3 parties en poids de sucre.

11. Procédé selon les revendications 1 à 10, **caractérisé en ce qu'**on utilise comme vitamines la niacine, l'acide pantothénique, l'acide folique, la biotine, la vitamine A, B1, B2, B6, B12, C et/ou E.

12. Procédé selon la revendication 11, **caractérisé en ce qu'**on ajoute les vitamines chaque fois en une telle quantité directement ou avec la substance support des grains de céréales à tamponner, pour que le produit à base de céréales taponné fini contienne 10 à 300% de dose journalière recommandée de ces vitamines pour 100 g de produit fini.

13. Procédé selon les revendications 1 à 12, **caractérisé en ce qu'**on utilise comme matières minérales et oligo-éléments le sodium, le potassium, le calcium, le magnésium, le fer, le zinc, le cuivre, le manganèse et/ou le chrome sous forme de carbonates, hydrogénocarboantes, phosphates, hydrogénophosphates, chlorures, sulfates, gluconates et/ou un sel d'acide gras et/ou le sélénium comme sélénite ou des composés d'acide aminé de sélénium.

14. Procédé selon la revendication 13, **caractérisé en ce que** les matières minérales et/ou les oligo-éléments sont ajoutés chaque fois dans une telle quantité directement ou avec la substance support des grains de céréales à tamponner pour que le produit à base de céréales taponné fini contienne 10 à 100% de dose journalière recommandée de ces composés.

15. Procédé selon la revendication 1, **caractérisé en ce que** la quantité à ajouter de vitamines et/ou de matières minérales et/ou d'oligo-éléments est dissoute ou dispersée dans la substance support à une température de 20 à 90°C sous agitation continue, et **en ce que** le produit homogénéisé obtenu est introduit dans ou ajouté aux grains de céréales.

16. Procédé selon la revendication 1, **caractérisé en ce qu'**on chauffe en premier lieu la graisse et/ou l'huile de 70 à 90°C, puis on ajoute lentement sous agitation le sucre et/ou le sel et on homogénéise sous agitation postérieure le mélange obtenu, les vitamines, les matières minérales et/ou les oligo-éléments étant ajoutés à une température de 20 à 90°C et le mélange total étant agité jusqu'à ce qu'il soit homogène, et **en ce que** le produit homogénéisé obtenu est introduit dans ou ajouté aux grains de céréales.
